# EUROPEAN PATENT APPLICATION

(11) **EP 4 656 314 A1**
(43) Date of publication of application: **03.12.2025**
(21) Application number: 24425021.3
(22) Date of filing: 30.05.2024
(51) Int. Cl.: B22F 10/28, B22F 12/90, B22F 10/322, B25J 9/02, B33Y 10/00, B33Y 30/00, B33Y 40/00, B33Y 50/02, G01P 5/00

(54) **DEVICE AND METHOD FOR MAPPING THE VELOCITY OF A GAS FLOW IN AN LPBF ADDITIVE MANUFACTURING PLANT**

(71) Applicant: Niri Societá a Responsabilitá Limitata, 10121 Torino (IT)
(72) Inventor: Nicastro, Riccardo, 10121 Torino (IT)
(74) Representative: Studio Torta S.p.A.

(57) **Abstract**

A mapping device (7) of the gas flow in LPBF additive manufacturing plants has a robot (8) configured to be arranged inside a process chamber (2) of an LPBF additive manufacturing plant (1); a movable member (10) selectively controlled by the robot (8); a first sensor (11; 12) supported by the movable member (10) to acquire a plurality of signals correlated to the velocity of the gas flow inside the process chamber (2).

## Description

### TECHNICAL FIELD

LPBF (acronym of Laser Powder Bed Fusion) additive manufacturing is a sector of additive manufacturing in which metal material in powder deposited in successive layers is melted, layer by layer, by means of a focused laser beam, in order to manufacture an object according to specific project parameters. The aforesaid process is performed inside an airtight process chamber, in which the oxygen is evacuated and a flow of inert gas is recirculated in order to remove the by-products that have been produced when the laser beam melts the metal powder. Recirculation of the gas flow is performed by means of a recirculating pump and the gas flow is filtered with special filters before being reintroduced into the process chamber.

### PRIOR ART

The efficiency and quality of production depend heavily on precise management of the velocity of the gas flow inside the work chamber. An alteration in the velocity of the gas flow can cause redepositing of by-products produced during the process. Alterations of the velocity of the gas flow can cause problems, including the formation of porosity and the inclusion of oxides, events to be avoided, particularly in applications of a high technological level.

The manufacturers of LPBF additive manufacturing plants often perform CFD (Computational Fluid Dynamics) analysis during the plant design and development phase, in order to simulate the velocity of the gas flow, but the theoretical analyses are often not very accurate, so the gas flow could cause defects such as porosity, lack of melting and inclusions of oxide, reducing the reliability and the performance of the products manufactured through LPBF, as already mentioned.

### OBJECT OF THE INVENTION

The object of the present invention is to create a mapping device of the velocity of the gas flow in LPBF additive manufacturing plants.

In accordance with the present invention, a mapping device of the velocity of the gas flow in LPBF additive manufacturing plants is created, the device comprising:
- a robot configured to be arranged inside a process chamber of an LPBF additive manufacturing plant;
- a movable member selectively controlled by the robot;
- at least a first sensor supported by the movable member to acquire a plurality of signals correlated to the velocity of a flow of inert gas inside the process chamber.

Thanks to this device, it is possible to create a mapping in the process chamber of the velocity values and of the gas in the same operating conditions of additive manufacturing with a precision that is much higher than CFD analyses.

In this case, the at least one sensor is selected from among a Pitot differential pressure sensor, a hot-wire anemometer, an ultrasonic anemometer, a Doppler anemometer and a helical anemometer, which have been demonstrated to be suitable to operate in the conditions present in the process chamber.

In particular, the mapping device comprises a control unit configured to acquire said signals correlated to the velocity of the gas; to control said robot and to associate said signals correlated to the velocity of the gas with respective coordinates of the first sensor inside the process chamber.

The control unit is associated with the robot and is arranged inside the process chamber, where the temperature can reach and exceed 60°C. For this reason, the mapping device comprises a shielded box configured to house and protect the control unit.

In order to check that the control unit operates in optimal conditions, the mapping device comprises a second sensor arranged inside the shielded box to acquire a signal correlated to the temperature inside said shielded box.

Moreover, the shielded box contains batteries, an actuator and a memory to memorise the signals acquired.

In order to check that acquisition of the signals correlated to the velocity of the gas flow is performed in the same working conditions that occur during the additive manufacturing operations in the process chamber, the mapping device comprises a third sensor configured to acquire a signal correlated to the temperature inside the process chamber.

In accordance with an embodiment of the present invention, the mapping device comprises a plurality of first sensors to simultaneously acquire respective signals correlated to the velocity of the gas flow in the process chamber.

In this manner, the mapping times can be reduced.

Furthermore, if the sensors used acquire signals of different physical quantities, although still attributable and correlated to the velocity of the gas flow, there is a redundant mapping in order to improve the accuracy of the velocity values, precisely because they are obtained from different physical quantities.

In particular, the robot is a Cartesian coordinate robot or an anthropomorphic robot configured to allow a three-dimensional mapping to be created.

Furthermore, the robot comprises a support structure configured to be fixed to the process chamber and to avoid undesired movements of the robot that could alter the mapping.

A further object of the present invention is to provide a mapping method of the velocity of the gas in LPBF additive manufacturing plants that is free of the problems of the prior art.

In accordance with the present invention, a mapping method of the gas flow in LPBF additive manufacturing plants is provided, the method comprising:
- arranging the mapping device in a process chamber of an LPBF additive manufacturing plant;
- closing the process chamber;
- recreating the same additive manufacturing operating conditions inside the process chamber;
- acquiring a plurality of signals correlated to the velocity of the gas flow inside the process chamber.

In this manner, it is possible to acquire real data that is very close to the real additive manufacturing operating conditions.

The method provides for associating the signals with the respective coordinates at which the signals have been acquired by means of a control unit, so as to map the process chamber.

### BRIEF DESCRIPTION OF THE FIGURES

Further characteristics and advantages of the present invention will become apparent from the following description of a non-limiting embodiment thereof, with reference to the appended Figures, wherein:
- Figure 1 is a front elevation view, with parts removed for clarity and schematised parts, of an additive manufacturing plant and of a mapping device created in accordance with the present invention;
- Figure 2 is a prospective view, with parts removed for clarity and on an enlarged scale, of the monitoring device of the present invention and of Figure 1; and
- Figure 3 is a prospective view, with parts removed for clarity and on an enlarged scale, of a detail of the monitoring device of Figures 1 and 2.

### PREFERRED EMBODIMENT OF THE INVENTION

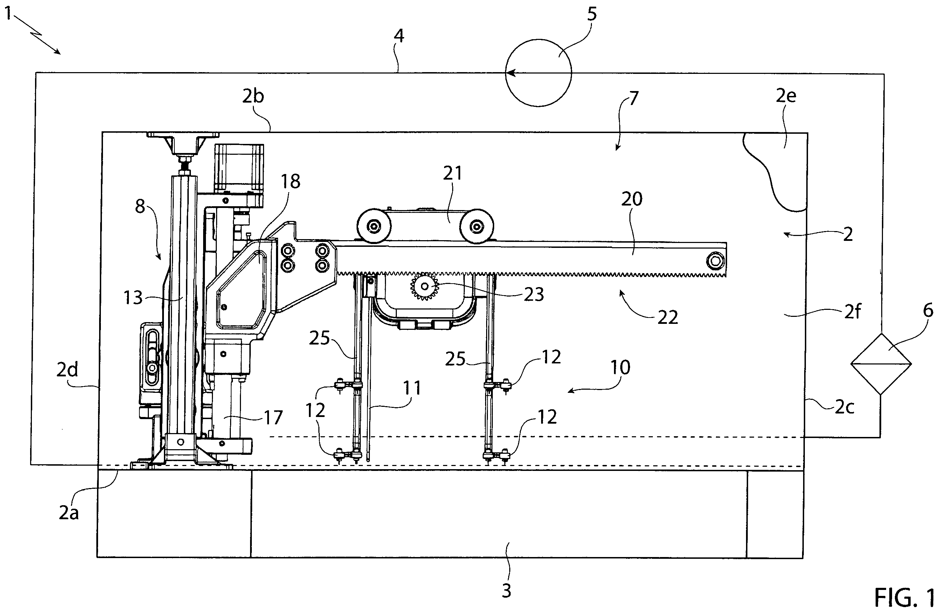

With reference to figure 1, the number 1 denotes, in its entirety, an LPBF additive manufacturing plant comprising a process chamber 2, a plate 3 to support the article to be manufactured by means of additive manufacturing, a conduit 4 to recirculate the gas, a recirculating pump 5 arranged along the conduit 4 and a filter 6 to filter the gas. The process chamber 2 comprises a lower wall 2a, an upper wall 2b, a side wall 2c, a door 2d, a rear wall 2e and a front wall 2f.

The supply of gas into the process chamber 2 occurs through the front wall 2f, in a distributed manner along the front wall 2f, whereas suction occurs through the rear wall 2e, in a distributed manner along the rear wall 2e.

In use, the plate 3 is selectively heatable and can be heated up to temperatures exceeding 500° C, so the temperature of the gas in the process chamber is at high temperatures generally exceeding 60°C. The plate 3 defines in part the lower wall 2a of the process chamber 2 and is movable with respect to the remaining walls 2b, 2c, 2e, 2f of the process chamber 2. In practice, as the article (not shown in the appended Figures) is gradually manufactured above the plate 3, the plate 3 lowers, maintaining the volume of the process chamber 2 unaltered.

A mapping device 7 for mapping the velocity of the gas flow in LPBF additive manufacturing plants is configured to be housed inside the process chamber 2.

In the case shown in Figure 1, the mapping device 7 comprises a robot 8, which comprises a support structure 9 and at least one member 10 selectively movable with respect to the support structure 9.

The movable member 10 is configured to support sensors 11 and 12 to acquire a plurality of signals correlated to the velocity of the gas flow inside the process chamber 2.

The support structure 9 is vertically extendible and configured to block the mapping device 7 inside the process chamber 2 by fixing the support structure 9 to the lower wall 2a and to the upper wall 2b of the process chamber 2.

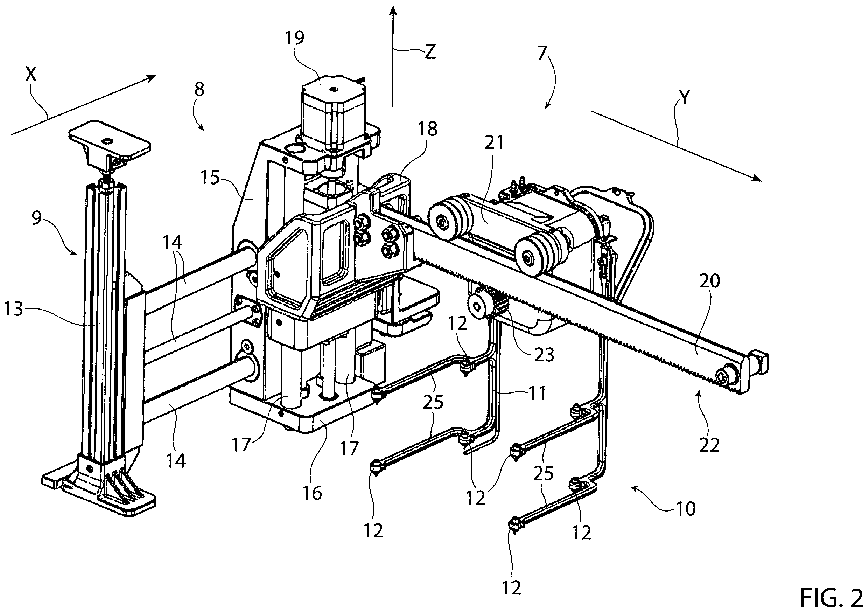

With reference to Figure 2, the robot 8 is the three-axes Cartesian coordinate type, with two motorised axes Y and Z and a manually adjustable axis X. In this case, the support structure 9 comprises a column 13 with adjustable height; guides 14 integral with the column 13, and a slide 15 sliding along the guides 14 and along the substantially horizontal axis X and provided with a closing flange 16 and guides 17.

The slide 15 may be provided with further elements for fixing to the process chamber 2.

The robot 8 comprises a slide 18 movable along the guides 17 and an actuator 19, in this case a motor that drives a screw-nut mechanism to advance the slide 18 on the guides 17 along a substantially vertical axis Z.

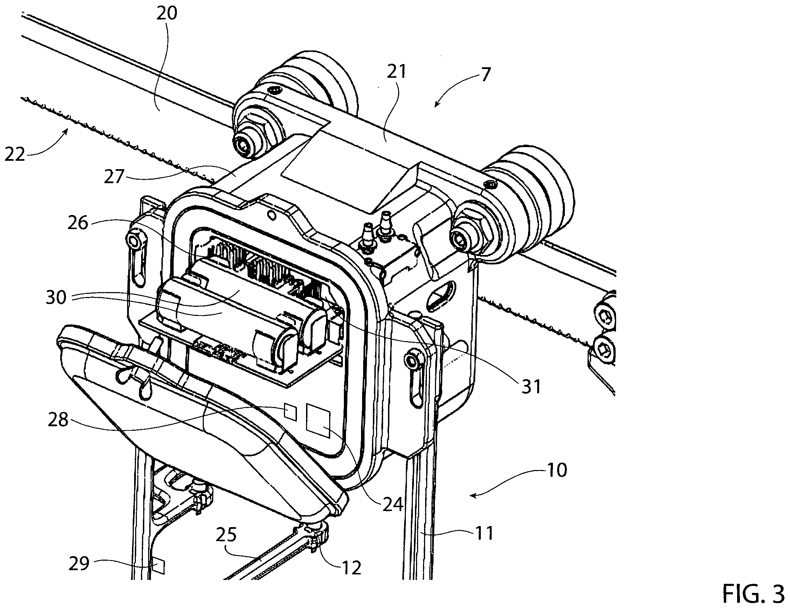

The robot 8 comprises a guide 20 integral with the slide 18 and extending along an axis Y perpendicular to the axis X and the axis Z and a motorised trolley 21 movable along the guide 20. In this case, the guide 20 has a rack 22 and the motorised trolley 21 has a pinion 23 engaged with the rack 22 and controlled by an actuator 24 (Figure 3) to advance the motorised trolley 21 on the guide 20 along the axis Y.

The aforementioned movable member 10 is supported by the motorised trolley 21 and, in the case shown, comprises a plurality of arms 25, which are configured to support the sensors 11 and 12.

The sensor 11 is a pneumatic probe, in this case a Pitot differential pressure sensor, whereas the sensor 12 is a hot-wire anemometer.

In accordance with variants of the present invention, the sensors 11 and 12 comprise an ultrasonic anemometer or a Doppler anemometer or a helical anemometer.

All the aforementioned sensors are configured to emit signals correlated to the velocity of the gas flow. In other words, all the signals detect physical quantities correlated to the velocity of the gas flow.

With reference to Figure 3, the mapping device 7 comprises a control unit 26 to acquire said correlated velocity signals, to control the actuators 19, 24 of the robot 8, and to associate the pressurised velocity signals to respective positions of the sensors inside the process chamber 2 (Figure 1). The motorised trolley 21 supports a shielded box 27 configured to contain and protect the control unit 26.

The mapping device 7 comprises a sensor 28 arranged inside said shielded box 27 to acquire a signal correlated to the temperature inside the shielded box 27 and a sensor 29 configured to acquire a signal correlated to the temperature inside the process chamber 2 (Figure 1).

The mapping device 7 comprises power batteries 30 of the control unit 26 and a memory 31 in which to save the data acquired.

In use and with reference to Figure 1, the mapping device 7 is arranged in a process chamber 2 of an LPBF additive manufacturing plant 1 and is enclosed inside it.

Subsequently, the same additive manufacturing operating conditions are recreated inside the process chamber with reference to the temperature, oxygen content, pressure and gas flow circulation conditions.

Inside the process chamber 2, the mapping device 7 acquires a plurality of signals F(V) correlated to the velocity of the gas flow inside the process chamber 2.

The control unit 26 that controls the movement of the movable member 10 and knows the coordinates of the sensors 11 and 12 associates said signals F(V) correlated to the velocity to respective coordinates in which the signals have been acquired with respect to a reference position.

The mapping device 7 provides for acquiring a signal correlated to the temperature close to said control unit 26 or inside the shielded box 27 and a signal correlated to the temperature inside the process chamber 2 substantially to control in which temperature conditions the acquisition of the signals F(V) correlated to the velocity has occurred.

The mapping of the process chamber 2 provides for moving the movable member 10 and detecting the signals F(V) correlated to the velocity and associating the data with the respective coordinates at which they have been detected.

In practice, the mapping consists of memorising a plurality of data with bijective association, such as, for example, Fᵢ(Vᵢ), Xᵢ, Yᵢ, Zᵢ.

As a function of the amplitude of the movements of the movable member 10, the mapping may be performed with a more or less dense spatial mesh.

Once acquisition of the data Fᵢ(Vᵢ) and the association with the respective coordinates Xi, Yi and Zi is completed, the mapping device 7 is extracted from the process chamber 2, and the data is transferred to a processing unit provided with a screen to display the data acquired in the form of graphs, to assist the operators of the plant 1 in optimal setting of the operating parameters thereof.

In general, there is a tendency to limit the number of logical operations performed by means of the control unit 26, in order to avoid its overheating, and to perform logical operations by means of the aforementioned external processing unit, such as, for example, the functions of transfer from the quantities detected to the velocity values.

It is clear that variants can be made to the present invention without thus deviating from the scope of protection of the appended claims.

For example, the robot may be an anthropomorphic robot with more degrees of freedom. Furthermore, the device may be configured for each direction of the gas flow and type of process chamber.

## Claims

1. A mapping device of a gas flow in LPBF additive manufacturing plants; the device comprising:
- a robot (8) configured to be arranged inside a process chamber (2) of an LPBF additive manufacturing plant (1);
- a movable member (10) selectively controlled by the robot (8); and
- at least one sensor (11; 12) supported by the movable member (10) to acquire a plurality of signals correlated to the velocity of a gas flow inside the process chamber (2).

2. The device as claimed in claim 1, wherein the said at least one sensor (11; 12) is selected from among a Pitot differential pressure sensor, a hot-wire anemometer, an ultrasonic anemometer, a Doppler anemometer, a helical anemometer.

3. The device as claimed in claim 1 or 2 and comprising a control unit (26) configured to acquire said signals correlated to the velocity; to control said robot (8) and to associate said signals correlated to the velocity of the gas with respective coordinates of the at least one sensor inside the process chamber (2).

4. The device as claimed in claim 3 and comprising a shielded box (27) configured to house and protect said control unit (26) .

5. The device as claimed in claim 4 and comprising a second sensor (28) arranged inside said shielded box (27) to acquire a signal correlated to the temperature inside said shielded box (27).

6. The device as claimed in any one of the preceding claims and comprising a third sensor (28) configured to acquire a signal correlated to the temperature inside the process chamber (2).

7. The device as claimed in any one of the preceding claims and comprising a plurality of first sensors (11; 12) to simultaneously acquire respective signals correlated to the respective velocities of the gas flow in the process chamber (2) .

8. The device as claimed in any one of the preceding claims, wherein said robot (8) is a Cartesian coordinate robot or an anthropomorphic robot.

9. The device as claimed in any one of the preceding claims, wherein the robot (8) comprises a support structure (9) configured to be fixed to the process chamber (2).

10. A method of mapping the velocity of the gas in LPBF additive manufacturing plants; the method comprising:
- arranging the mapping device (7) in a process chamber (2) of an LPBF additive manufacturing plant (1);
- closing the process chamber (2);
- recreating the additive manufacturing operating conditions inside the process chamber (2);
- acquiring a plurality of signals correlated to the velocity of the gas inside the process chamber (2).

11. The method as claimed in claim 10 and comprising associating said signals with the respective coordinates, wherein the signals have been acquired by means of a control unit (26).

12. The method as claimed in claim 11 and comprising shielding said control unit (26).

13. The method as claimed in any one of claims 10 to 12 and comprising acquiring a signal correlated to the temperature close to said control unit (26).

14. The method as claimed in any one of claims 10 to 13 and comprising acquiring a signal correlated to the temperature inside the process chamber (2).

15. The method as claimed in any one of claims 10 to 14 and comprising simultaneously acquiring a plurality of signals correlated to respective velocities of the gas flow at various coordinates inside the process chamber (2).

16. The method as claimed in any one of claims 10 to 15, and comprising mapping the process chamber by moving the first sensor configured to acquire a plurality of signals correlated to the velocity of the gas flow in the process chamber.

## Amended claims

### Amended claims in accordance with Rule 137(2) EPC.

1. A mapping device of a gas flow in LPBF additive manufacturing plants; the device comprising:
- a robot (8) configured to be arranged inside a process chamber (2) of an LPBF additive manufacturing plant (1);
- a movable member (10) selectively controlled by the robot (8); and
- at least one first sensor (11; 12) supported by the movable member (10) to acquire a plurality of signals correlated to the velocity of a gas flow inside the process chamber (2);
- a control unit (26), which is associated with the robot (8), is arranged inside the process chamber (2), and is configured to acquire said signals correlated to the velocity; to control said robot (8) and to associate said signals correlated to the velocity of the gas with respective coordinates of the at least one sensor inside the process chamber (2);
- batteries (30);
- an actuator (24);
- a memory (31) to memorise the signal acquired;
- a shielded box (27) configured to house and protect said control unit (26), the batteries (30), the actuator (24) and the memory (31);
- a second sensor (28) arranged inside said shielded box (27) to acquire a signal correlated to the temperature inside said shielded box (27).

2. The device as claimed in claim 1, wherein the said at least one first sensor (11; 12) is selected from among a Pitot differential pressure sensor, a hot-wire anemometer, an ultrasonic anemometer, a Doppler anemometer, a helical anemometer.

3. The device as claimed in any one of the preceding claims and comprising a third sensor (28) configured to acquire a signal correlated to the temperature inside the process chamber (2).

4. The device as claimed in any one of the preceding claims and comprising a plurality of first sensors (11; 12) to simultaneously acquire respective signals correlated to the respective velocities of the gas flow in the process chamber (2).

5. The device as claimed in any one of the preceding claims, wherein said robot (8) is a Cartesian coordinate robot.

6. The device as claimed in any one of the preceding claims, wherein the robot (8) comprises a support structure (9) configured to be fixed to the process chamber (2).

7. A method of mapping the velocity of the gas in LPBF additive manufacturing plants; the method comprising:
- arranging the mapping device (7) in a process chamber (2) of an LPBF additive manufacturing plant (1);
- closing the process chamber (2);
- recreating the additive manufacturing operating conditions inside the process chamber (2);
- acquiring a plurality of signals correlated to the velocity of the gas inside the process chamber (2);
- associating said signals with the respective coordinates, wherein the signals have been acquired by means of a control unit (26) and memorized in a memory (31);
- shielding said control unit (26) and said memory (31);
- acquiring a signal correlated to the temperature in said control unit (26), which is associated with the robot (8) and is arranged inside the process chamber (2).

8. The method as claimed in claim 7 and comprising acquiring a signal correlated to the temperature inside the process chamber (2).

9. The method as claimed in claim 7 or 8 and comprising simultaneously acquiring a plurality of signals correlated to respective velocities of the gas flow at various coordinates inside the process chamber (2).

10. The method as claimed in any one of claims 7 to 9, and comprising mapping the process chamber by moving the first sensor configured to acquire a plurality of signals correlated to the velocity of the gas flow in the process chamber.
